# FASCICULE DE BREVET EUROPEEN

(11) **EP 2 655 455 B1**
(45) Date de publication et mention de la délivrance du brevet: **01.06.2016**
(21) Numéro de dépôt: 11817374.9
(22) Date de dépôt: 16.12.2011
(51) Int. Cl.: C08F 293/00, C08F 2/22

(54) **PARTICULES POLYMERIQUES FILAMENTEUSES ET PROCEDE DE PREPARATION DESDITES PARTICULES PAR POLYMERISATION RADICALAIRE CONTROLEE EN EMULSION**
FILAMENTÖSE POLYMERPARTIKEL UND VERFAHREN ZU IHRER HERSTELLUNG DURCH KONTROLLIERTE RADIKALISCHE EMULSIONSPOLYMERISATION
FILAMENTOUS POLYMER PARTICLES AND METHOD FOR PREPARING SAME BY MEANS OF CONTROLLED RADICAL POLYMERISATION IN EMULSION

(30) Priorité: 23.12.2010 FR 1061152
(43) Date de publication de la demande: 30.10.2013
(73) Titulaire: Arkema France, 92700 Colombes (FR); Centre National de la Recherche Scientifique, 75016 Paris (FR); Université Pierre et Marie Curie (Paris 6), 75005 Paris (FR)
(72) Inventeur: MAGNET, Stéphanie, F-64300 Morlanne (FR); INOUBLI, Raber, F-64000 Pau (FR); COUVREUR, Laurence, F-75009 Paris (FR); CHARLEUX, Bernardette, F-69003 Lyon (FR); BRUSSEAU, Ségolène, F-94230 Cachan (FR)
(74) Mandataire: Albani, Dalila
(86) Numéro de dépôt international: PCT/FR2011/053029
(87) Numéro de publication internationale: WO 2012/085415

(56) Documents cités:
- WO-A2-2009/150367
- DELAITTRE G ET AL: "Aqueous suspension of amphiphilic diblock copolymer nanoparticles prepared in situ from a water-soluble poly(sodium acrylate) alkoxyamine macroinitiator", SOFT MATTER R. SOC. CHEM. UK, vol. 2, no. 3, 7 mars 2006 (2006-03-07), pages 223-231, XP002649693, ISSN: 1744-683X

## Description

La présente invention concerne des particules polymériques sous forme de filaments constitués de copolymères à blocs, ainsi que leur procédé de préparation par polymérisation radicalaire contrôlée en émulsion en présence d'un macroamorceur vivant spécifique.

Des agrégats polymériques filamenteux, connus également sous l'appellation « micelles vermiformes » ou « micelles cylindriques » ou encore « filomicelles » ont été étudiés ces dernières années en raison de l'intérêt croissant qu'ils présentent notamment dans des applications biomédicales comme systèmes d'administration de médicaments. Ces agrégats polymériques sont préparés par l'assemblage des copolymères à blocs amphiphiles dans un solvant sélectif ; ces méthodes nécessitent l'emploi de co-solvants organiques, comprennent un grand nombre d'étapes et posent des problèmes de reproductibilité.

Des voies alternatives de préparation ont été proposées, par exemple dans la publication de G. Delaittre et al. Chem. Commun. 2009, 2887-2889 qui décrit la préparation de vésicules de copolymères à blocs amphiphiles PNaA-b-P4VP. Ceux-ci sont obtenus en milieu aqueux, à pH 11, en une seule étape, par PRC en émulsion; la réaction de polymérisation de la 4VP est amorcée à l'aide d'une macroalcoxyamine de polyacrylate de sodium-SG1 soluble dans l'eau. Les copolymères obtenus s'assemblent pour former des agrégats, l'extension des chaînes s'effectuant du côté des chaînes hydrophobes. Les observations au microscope électronique en transmission (TEM) ont montré que les particules polymériques formées ont des tailles en dessous du micromètre et que leurs formes sont variables, allant des particules sphériques (60 nm) à des micelles vermiformes (60 nm de largeur), puis à des vésicules sphériques et vésicules allongées ou vésicules à compartiments multiples, comme montré dans la figure 3 de ce document. La longueur de ces particules reste cependant faible, seulement quelques-unes des micelles ayant une longueur supérieure à 1 micron.

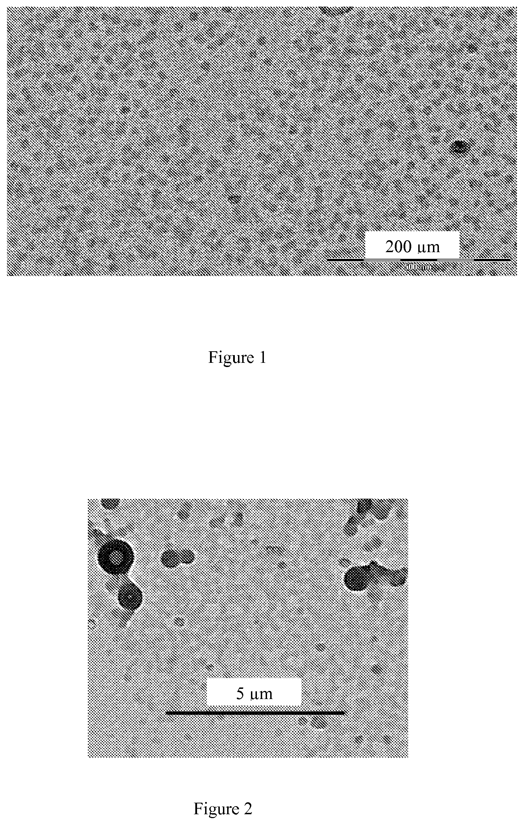

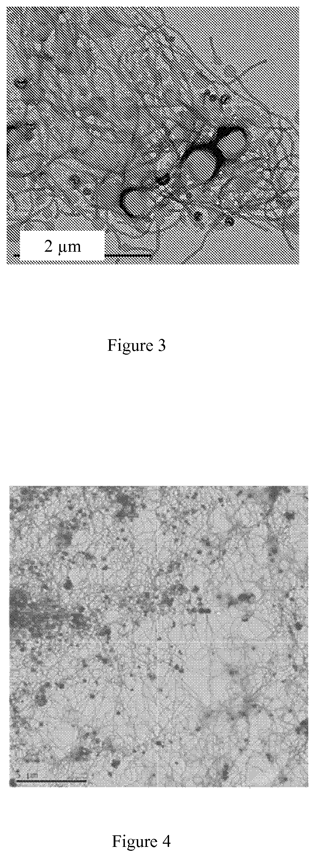

Une autre voie a été décrite par S. Boissé et al. dans Chem. Commun. 2010, 46, 1950-1952. Ce document expose la préparation de nanofibres constituées de copolymères à blocs amphiphiles par polymérisation radicalaire par transfert réversible par addition fragmentation (RAFT). Le styrène est polymérisé dans l'eau en présence d'un agent RAFT macromoléculaire (ou macroagent RAFT) hydrophile. Lorsque l'homopolymère de l'acide acrylique (AA) ou du méthyl éther acrylate de poly(ethylene glycol) (PEGA) est employé comme macroagent RAFT, les copolymères à blocs obtenus se présentent sous forme de micelles sphériques (comme montré dans la figure 1 de l'article cité, (1) et (9) respectivement). Seulement l'emploi de macroagents RAFT copolymères composés de AA et de PEGA a permis l'obtention de micelles vermiformes mélangées à des vésicules (comme montré dans la figure 1 de l'article cité (2), (3) et (8)). On favorise la formation de particules sous forme de fibres, comme montré dans la figure 2 de l'article cité, lorsque le pH est faible ou lorsque le pH est élevé et en parallèle la force ionique est élevée. Enfin, les résultats présentés dans la figure 3 de ce document montrent que plus le taux de conversion augmente, plus la morphologie des particules évolue des formes sphériques vers des formes fibrillaires.

La polymérisation au moyen d'agents RAFT est cependant limitée, car elle nécessite l'emploi d'un amorceur radicalaire additionnel tout au long de la polymérisation, ce qui peut perturber la formation de copolymères à blocs.

La présente invention se propose de remédier aux inconvénients des méthodes de l'art antérieur exposées ci-dessus. Elle a pour objet la préparation de particules filamenteuses par la polymérisation radicalaire contrôlée en émulsion de monomères hydrophobes, en utilisant comme amorceurs des macroamorceurs vivants dérivés de nitroxydes. De plus, l'invention a pour objet une méthode directe de préparation de particules filamenteuses qui ne nécessite pas l'emploi de co-solvant organique.

A cet effet et selon un premier objet, la présente invention se rapporte à un procédé de préparation de particules filamenteuses réticulées, lesdites particules étant constituées de copolymères à blocs synthétisés par polymérisation radicalaire contrôlée en émulsion effectuée à partir d'au moins un monomère hydrophobe et d'un comonomère réticulant en présence d'un macroamorceur vivant dérivé d'un nitroxyde, caractérisé en ce que :
- lesdites particules filamenteuses sont obtenues en milieu aqueux directement lors de la synthèse desdits copolymères à blocs effectuée en chauffant le milieu de réaction à une température de 60 à 120°C,
- ledit macroamorceur est hydrosoluble,
- le pourcentage de la masse molaire du macroamorceur hydrosoluble dans le copolymère à blocs final est compris entre 10 et 50%, et en ce que
- le taux de conversion du monomère hydrophobe est d'au moins 50%.

Dans le cadre de la présente invention, le terme « particules filamenteuses » correspond à des assemblages de macromolécules amphiphiles qui, lorsqu'elles sont en suspension dans l'eau (autrement dit, lorsqu'elles forment une dispersion aqueuse), prennent la forme de filaments (autrement dit, de cylindres pleins et flexibles) dont le coeur est constitué des éléments hydrophobes et la surface des éléments hydrophiles desdites macromolécules. Ces particules filamenteuses sont observables au microscope électronique en transmission (TEM). La longueur de ces filaments est d'au moins 10 micromètres.

A la différence des particules filamenteuses, les particules (ou micelles) sphériques en suspension dans l'eau sont des assemblages de molécules amphiphiles qui prennent la forme d'une sphère pleine dont le coeur est constitué des éléments hydrophobes des molécules et la surface des éléments hydrophiles.

Dans le document WO 2009150367 la demanderesse avait déjà décrit la préparation de particules polymériques à partir d'au moins un monomère hydrophobe méthacrylate et d'un autre monomère hydrophobe en présence d'un macroamorceur vivant de type nitroxyde, dérivé du SG1. Les particules polymériques ainsi obtenues se présentent sous forme de micelles sphériques, quel que soit le taux de conversion. Elles sont caractérisées dans l'exemple 2 comparatif de la présente invention ainsi que dans la figure 1 annexée.

De manière surprenante il a maintenant été trouvé qu'en présence d'un macroamorceur hydrosoluble et d'un comonomère réticulant et en sélectionnant un ratio spécifique entre les masses molaires du macroamorceur hydrosoluble et du second bloc hydrophobe, des particules filamenteuses sont obtenues. Avantageusement, ces particules filamenteuses sont hors de l'équilibre thermodynamique (on dit qu'elles sont dans un état gelé) contrairement aux micelles vermiformes décrites précédemment qui, sous l'effet de la dilution, passent à l'état de micelles sphériques, qui est un état thermodynamique plus stable. Cet état hors équilibre thermodynamique est indépendant de la valeur de la transition vitreuse du polymère, mais dépendant en partie de la longueur du bloc hydrophobe. Les particules filamenteuses selon l'invention voient leur forme et structure se maintenir en milieu dispersé, indépendamment de leur concentration dans le milieu, de la dialyse des particules (figure 6), de la centrifugation du milieu (figure 7), des variations de pH (figure 8) ou de salinité de celui-ci (figure 9).

L'invention et les avantages qu'elle procure seront mieux compris à la lumière de la description détaillée qui va suivre et des figures annexées dans lesquelles :
- la figure 1 est l'image obtenue par TEM pour les particules sphériques de l'exemple comparatif 2, correspondant à l'invention décrite dans le document WO 2009150367 ; le taux de conversion massique est de 67,2%, et le taux massique de la partie hydrophile composant le copolymère à bloc (ou « taux de fraction hydrophile ») est de 23,4% en poids;
- la figure 2 correspond à l'image TEM de particules filamenteuses selon l'exemple comparatif 3, pour un taux de conversion massique de 25,5% et un taux de fraction hydrophile de 31 % en poids ;
- la figure 3 correspond à l'image TEM de particules filamenteuses selon l'exemple comparatif 3, pour un taux de conversion massique de 52% et un taux de fraction hydrophile de 18% en poids ;
- la figure 4 correspond à l'image TEM de particules filamenteuses selon l'exemple comparatif 3, pour un taux de conversion massique de 68% et un taux de fraction hydrophile de 14,4% en poids ;

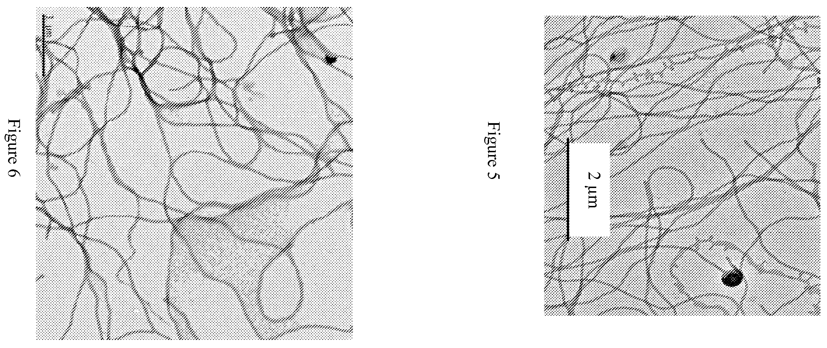

- la figure 5 illustre les particules filamenteuses réticulées selon l'invention, pour un taux de conversion massique de 68% et un taux de fraction hydrophile de 14,4% en poids, telles qu'observées au TEM ;
- la figure 6 correspond à l'image TEM de particules filamenteuses préparées dans une solution à 0,2% en poids dialysées pendant 4 jours contre de l'eau ultra pure ;

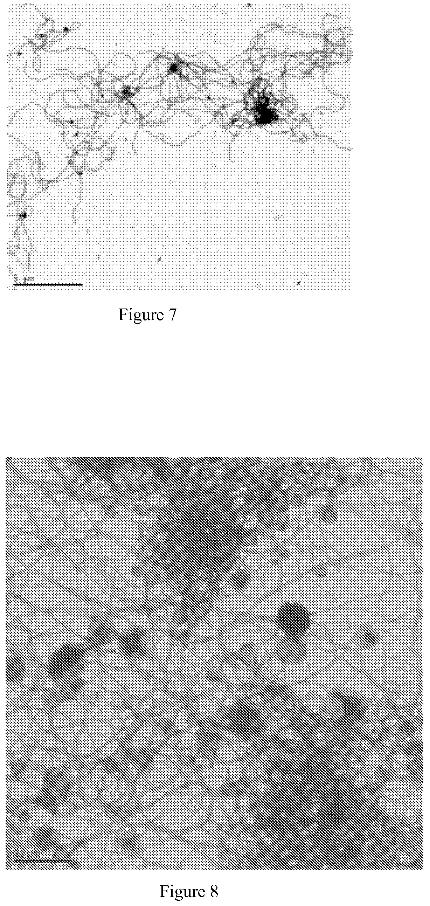

- la figure 7 correspond à l'image TEM de ces particules filamenteuses après centrifugation ;
- la figure 8 correspond à l'image TEM de particules filamenteuses diluées dans une solution à pH 5 ;

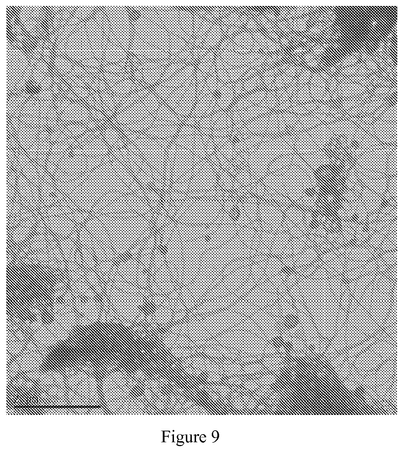

- la figure 9 correspond à l'image TEM de particules filamenteuses diluées dans une solution aqueuse contenant 35 g de sel (NaCl) pour 1kg d'eau.

Les recherches menées par la Demanderesse ont visé la mise au point d'une méthode permettant de préparer des particules filamenteuses stables en dispersion aqueuse.

A cet effet, l'invention a pour objet, selon un premier aspect, un procédé de préparation de particules polymériques filamenteuses réticulées, lesdites particules étant constituées de copolymères à blocs synthétisés par polymérisation radicalaire contrôlée en émulsion effectuée à partir d'au moins un monomère hydrophobe et d'un comonomère réticulant en présence d'un macroamorceur vivant, dérivé d'un nitroxyde.

De manière caractéristique, lesdites particules filamenteuses réticulées sont obtenues en milieu aqueux dispersé par synthèse desdits copolymères à blocs effectuée in situ en chauffant le milieu de réaction à une température de 60 à 120°C, ledit macroamorceur étant hydrosoluble, avec un pourcentage de la masse molaire du macroamorceur hydrosoluble dans le copolymère à blocs final compris entre 10 et 50%, le taux de conversion du monomère hydrophobe étant d'au moins 50%. Le pH initial du milieu aqueux peut varier entre 5 et 10. Cette méthode directe de préparation de particules filamenteuses réticulées ne nécessite pas l'emploi de co-solvant organique.

Par « macroamorceur vivant » on entend un polymère comprenant au moins une extrémité apte à être réengagée dans une réaction de polymérisation par ajout de monomères à une température et pression appropriées. Avantageusement, ledit macroamorceur est préparé par PRC. Par « macroamorceur hydrosoluble » on entend un polymère soluble dans l'eau comportant à son extrémité une fonction réactive capable de réamorcer une polymérisation radicalaire. Ce macroamorceur est composé majoritairement de monomères hydrophiles, c'est à dire des monomères présentant une ou plusieurs fonctions aptes à établir des liaisons hydrogène avec l'eau. Dans le cas de la polymérisation d'un monomère hydrophobe, on formera un copolymère amphiphile dont le bloc hydrophile sera constitué par le macroamorceur alors que le bloc hydrophobe sera issu de la polymérisation du (des) monomère(s) hydrophobes.

Selon une variante de réalisation, ledit macroamorceur hydrosoluble préformé est ajouté au milieu de réaction comprenant au moins un monomère hydrophobe.

Selon une autre variante de réalisation, ledit macroamorceur hydrosoluble est synthétisé dans le milieu de réaction aqueux en une étape préliminaire, sans isolement du macroamorceur formé ni élimination des éventuels monomères hydrophiles résiduels Cette deuxième variante est une polymérisation « one-pot ».

Les monomères hydrophobes peuvent être choisis parmi :
- les monomères vinylaromatiques tels que le styrène ou les styrènes substitués,
- les acrylates d'alkyle, de cycloalkyle ou d'aryle tels que l'acrylate de méthyle, d'éthyle, de butyle, d'éthyl-2 hexyle ou de phényle,
- les méthacrylates d'alkyle, de cycloalkyle, d'alkényle ou d'aryle tels que le méthacrylate de méthyle, de butyle, de lauryle, de cyclohexyle, d'allyle, d'éthyl-2 hexyle ou de phényle
- et la vinylpyridine.
Ces monomères hydrophobes sont ajoutés au milieu de réaction, qui comprend majoritairement de l'eau.

De manière préférée, le pourcentage de la masse molaire du macroamorceur hydrosoluble dans le copolymère à blocs final est compris entre 10 et 30%.

La mise en oeuvre du procédé selon l'invention permet d'obtenir des particules polymériques filamenteuses réticulées dans lesquelles le taux massique de la partie hydrophile composant le copolymère à bloc est inférieur à 25%.

Le milieu de réaction étant additionné d'un agent réticulant, on obtient des particules filamenteuses réticulées. Ledit agent réticulant est un comonomère réticulant différent des monomères hydrophobes précités.

Par comonomère réticulant, on entend un monomère qui, de par sa réactivité avec les autres monomères présents dans le milieu de polymérisation, est capable de générer un réseau tridimensionnel covalent. D'un point de vue chimique, un comonomère réticulant comprend généralement au moins deux fonctions polymérisables éthyléniques, qui en réagissant, sont susceptibles de créer des ponts entre plusieurs chaînes polymériques.

Ces comonomères réticulants peuvent être susceptibles de réagir avec les monomères hydrophobes insaturés lors de la synthèse desdites particules.

Parmi les comonomères réticulants, on peut citer les divinylbenzènes, les trivinylbenzènes, les (méth)acrylates allyliques, les (méth)acrylates de diallylmaléatepolyol tels que les tri(méth)acrylates de triméthylolpropane, les di(méth)acrylates d'alkylèneglycol qui ont de 2 à 10 atomes de carbone dans la chaîne carbonée tels que les di(méth)acrylates d'éthylèneglycol, les di(méth)acrylates de 1,4-butanediol, les di(méth)acrylates de 1,6-hexanediol, les N,N'-alkylène bisacrylamides, tels que le N,N'-méthylène bisacrylamide. De préférence, on utilisera comme agent réticulant le divinylbenzène ou un diméthacrylate.

Le comonomère réticulant est introduit, avantageusement, dans le milieu réactionnel, en une teneur allant de 1 à 12% en poids par rapport au poids de monomère hydrophobe ou de 0,2 à 2% en poids par rapport à l'ensemble du milieu réactionnel.

L'ajout du comonomère réticulant peut être réalisée simultanément ou en différé par rapport à l'ajout de monomère(s) hydrophobe(s).

Ainsi, selon un premier mode de réalisation, le comonomère réticulant peut être ajouté en même temps que le(s) monomère(s) hydrophobes. Ce mode de réalisation est particulièrement approprié, lorsque le comonomère réticulant est introduit en une quantité inférieure à 10% en poids, plus particulièrement inférieure à 5% en poids par rapport à celle du(des) monomère(s) hydrophobe(s). Le caractère contrôlé de la polymérisation radicalaire permet d'obtenir une modération au niveau de la croissance de chaînes et d'éviter ainsi la création de noeuds de réticulation en solution avant la formation de particules filamenteuses.

Selon un second mode de réalisation, le comonomère réticulant peut être ajouté en différé par rapport au(x) monomère(s) hydrophobe(s). De préférence, le comonomère réticulant est introduit après l'étape de formation des particules de polymères (dite étape de nucléation). Ce mode de réalisation est particulièrement approprié, lorsque le comonomère réticulant est introduit en une quantité supérieure à 5% en poids par rapport à celle du(des) monomère(s) hydrophobe(s), plus particulièrement supérieure à 10% en poids. En différant de la sorte l'addition de comonomère réticulant, on s'affranchit de la formation de macrogel dans le milieu réactionnel. Il est alors possible d'augmenter le dosage du comonomère réticulant et de régler ainsi le niveau de réticulation de la particule en son coeur. Ce mode de réalisation est particulièrement avantageux, en ce sens qu'il permet de dissocier l'étape de nucléation de l'étape de réticulation, afin d'obtenir un meilleur contrôle des tailles de particules générées au cours du procédé. Du fait de leur caractère vivant, toutes les chaînes polymériques sont incorporées dans le microgel.

Selon un second aspect, l'invention a trait aux particules filamenteuses préparées au moyen du procédé selon l'invention. De manière caractéristique, ces particules présentent un pourcentage de la masse molaire du macroamorceur hydrophile dans le copolymère à blocs final compris entre 10 et 50%. Telles qu'observées par TEM, elles se présentent sous forme de fibres dont la longueur est supérieure à 10 micromètres. Les particules filamenteuses selon l'invention voient leurs forme et structure se maintenir en milieu dispersé, indépendamment de leur concentration dans le milieu et/ou des variations de pH ou de salinité de celui-ci.

Les particules filamenteuses sont réticulées, car elles sont obtenues en présence d'un comonomère réticulant. Sous cette forme, elles gardent leurs forme et structure en milieu dispersé, indépendamment de leur concentration dans le milieu et/ou des variations de pH ou de salinité de celui-ci.

L'invention va maintenant être décrite à l'aide des exemples suivants donnés à titre illustratif et non limitatif.

### Exemple 1 : Préparation du macroamorceur, poly(acide méthacrylique-co-styrène sulfonate de sodium)

L'exemple 1 illustre la préparation d'un copolymère vivant poly(acide méthacrylique-*co-*styrène sulfonate de sodium), utilisé comme macroamorceur, agent de contrôle et stabilisant pour la mise en oeuvre du procédé de l'invention.

Pour ce faire, un mélange contenant 75,2 g d'acide méthacrylique (2,0 mol.L⁻¹), 17,32 g de styrène sulfonate de sodium (0,18 mol.L⁻¹ soit f_{0,SS} = 0,087 et 398 g de DMSO est dégazé à température ambiante par un bullage d'azote. 3,782 g (2,27×10-2 mol.L⁻¹) de l'alcoxyamine BlocBuilder^{®}-MA (*N-*(2-methylpropyl)-*N-*(1-diethylphosphono-2,2-dimethylpropyl)-*O*-(2-carboxylprop-2-yl) hydroxylamine) est ensuite ajouté.

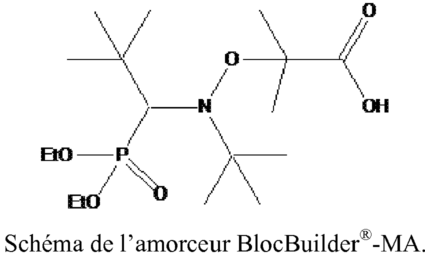

Le dégazage est poursuivi pendant 10 minutes. Le mélange dégazé est introduit dans un tricol de 1L, préchauffé à 75°C, surmonté d'un réfrigérant muni d'un bulleur, d'une entrée d'azote et d'un thermomètre. La polymérisation est réalisée à 76°C et le temps t=0 est déclenché lorsque la température atteint 35°C dans le milieu réactionnel. Le macroamorceur obtenu est le P(MAA-*co*-SS)-SG₁. La manipulation est stoppée après 16 minutes de réaction en plongeant le milieu sous agitation dans un erlenmeyer refroidit avec un bain de glace. Le milieu de réaction est ensuite précipité gouttes à gouttes, en deux fois, dans un volume total de 4,5 litres de dichlorométhane refroidit soumis à une vive agitation. Un précipité blanc apparaît dans le milieu. Le milieu est filtré sous fritté de porosité n°4 puis séché pendant 3 jours sous vide.

Des prélèvements sont réalisés au temps initial et final afin de :
- déterminer la cinétique de polymérisation (détermination de la conversion molaire et massique par RMN ¹H (DMSO d₆, 300 MHz) ;
- suivre l'évolution des masses molaires moyennes en nombre (Mn) en fonction de la conversion en monomères.

Le tableau 1 ci-dessous présente les caractéristiques du macroamorceur synthétisé après purification.

**Tableau 1**

| Temps (min) | Conversion (%) | Mₙ,^{a)} _{expérimental} (g.mol⁻¹) | Mₙ,^{b)} _{théorique} (g.mol⁻¹) | Iₚ | Mn,^{c)} _{expérimental} (g.mol⁻¹) |
|---|---|---|---|---|---|
| 16 | 10 | 7200 | 1 300 | 1,5 | 6350 |

| | | | | | |
|---|---|---|---|---|---|
| (a) Déterminée par chromatographie d'exclusion stérique dans le DMF avec 1g.L⁻¹ de LiBr, avec une calibration au polyméthacrylate de méthyle, après méthylation des unités acide méthacryliques en unités méthacrylate de méthyle après purification; (b) Calculée à partir d'unités méthacrylate de méthyle ; (c) Calculée à partir d'unités acide méthacrylique après purification. | | | | | |

La Mₙ expérimentale est déterminée par chromatographie d'exclusion stérique dans le DMF contenant 1g/L de LiBr, avec calibration au polyméthacrylate de méthyle, après méthylation des unités acide méthacryliques en unités méthacrylate de méthyle. Le débit est à 0,8 mL/min avec le toluène comme marqueur de débit. Les échantillons sont préparés à une concentration de 5 mg/mL, sont filtrés sur des filtres de 0,45 µm et sont analysés sur des colonnes Polymer Standards Service Columns (GRAM de 30 - 1 000 Å).

L'indice de polydispersité Iₚ est calculé à partir d'unités méthacrylates de méthyle.

Le caractère vivant de ce macroamorceur est testé dans un premier temps par une analyse de RMN ³¹P. Cette technique de caractérisation montre la présence du phosphore dans le polymère purifié.

Une seconde expérience d'extension de chaîne est effectuée pour obtenir un copolymère à bloc de type poly(acide méthacrylique-*co*-styrène sulfonate de sodium)-*b*-poly(styrène).

Un mélange contenant 61,4 mg du macroamorceur purifié P(MAA-*co*-SS)-SG1 (3,08×10⁻³ mol.L⁻¹), 1,314 g de styrène (3,22 mol.L⁻¹), 2,7335 g de DMSO est dégazé à température ambiante par un bullage d'azote pendant 20 minutes dans un ballon de 10 mL. Le ballon est plongé dans un bain d'huile à 120°C pendant 5,5 heures.

Le polymère obtenu est analysé pour :
- déterminer la conversion de la polymérisation (détermination par gravimétrie) ;
- suivre la valeur de la masse molaire moyenne en nombre (Mn) en fonction de la conversion en monomère.

Le tableau 2 ci-dessous présente les caractéristiques du polymère P(MAA-*co*-SS)-*b*-P(Sty) synthétisé.

**Tableau 2**

| Temps (h) | Conversion (%) | M_{n, expérimental} (g.mol⁻¹) | M_{n théorique} (g.mol⁻¹) | Iₚ |
|---|---|---|---|---|
| 5,5 | 38 | 58 350 | 65 750 | 1,44 |

La Mₙ expérimentale est déterminée par chromatographie d'exclusion stérique dans le DMF contenant 1g.L⁻¹ de LiBr, avec une calibration au polyméthacrylate de méthyle, après méthylation des unités acide méthacryliques en unités méthacrylate de méthyle.

### Exemple 2 comparatif: procédé d'obtention de micelles sphériques

L'exemple 2 illustre la synthèse de particules sous formes de micelles sphériques de copolymères à blocs poly(méthacrylate de sodium-*co*-styrène sulfonate de sodium)-*b-*poly(méthacrylate de méthyle-*co*-styrène) à partir du macroamorceur préparé et isolé dans l'exemple 1.

Dans un ballon monocol de 250 mL sont introduits 41,5 g d'eau permutée, 4,1 g de macroamorceur P(MAA-*co*-SS)-SG₁ (8,14×10⁻³ mol.L⁻¹ₑₐᵤ) préparé dans l'exemple 1, 37,8 g de soude 1M (1 équivalent par rapport aux unités acide méthacrylique) et 0,29 g de Na₂CO₃ (3,46×10⁻² mol.L⁻¹). Ce mélange est agité à température ambiante, pendant 15 minutes environ, jusqu'à dissolution complète du macroamorceur, qui est alors sous la forme poly(méthacrylate de sodium-*co*-styrène sulfonate de sodium). 18,2 g de méthacrylate de méthyle et 1,9 g de styrène sont ensuite ajoutés (taux de solide = 19,2%) et le mélange est dégazé par un bullage d'azote à température ambiante pendant 30 minutes.

Le milieu est introduit dans un réacteur chaud sous une pression de 3 bar en azote et une agitation à 250 rpm. Le temps t=0 est déclenché à 60°C et le réacteur est maintenu à 90°C tout le long de la polymérisation. Des prélèvements sont réalisés à intervalles réguliers afin de:
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex (par Microcopie Electronique à Transmission (TEM) et par diffusion de la lumière : diamètre moyen des particules, distribution en taille des particules (polydispersité)).

Le tableau 3 ci-dessous présente les caractéristiques des latex prélevés.

Le latex obtenu en fin de polymérisation est transparent et est très peu visqueux.

L'aspect des particules est analysé par microscopie électronique à transmission. Ce microscope est de type JEOL 100 Cx II à 100 keV équipé avec une caméra haute résolution CCD camera Keen View de SIS. L'image obtenue est présentée dans la figure 1 annexée (67,2% en conversion massique avec un taux de 23,4% en poids en fraction hydrophile).

**Tableau 3**

| Temps (h) | Conversion (%) | M_{n, exp}^{a} g.mol⁻¹ | Mₙ, théo^{b} g.mol⁻¹ | Iₚ^{a} | pH | Dz^{c} (nm) | ∑^{d} |
|---|---|---|---|---|---|---|---|
| 0,25 | 17,6 | 19700 | 12 700 | 1,27 | - | - | - |
| 0,5 | 26,9 | 23 150 | 15570 | 1,37 | 7 | - | - |
| 0,75 | 37,6 | 31 700 | 18 900 | 1,2 | - | - | - |
| 1 | 56,2 | 35 960 | 24 700 | 1,23 | - | - | - |
| 2,9 | 67,2 | 40 500 | 28 000 | 1,29 | 6,85 | 36,8 | 0,16 |

| | | | | | | | |
|---|---|---|---|---|---|---|---|
| (a) Déterminées par chromatographie d'exclusion stérique dans le DMF avec 1g.L⁻¹ de LiBr, avec calibration au polyméthacrylate de méthyle, après méthylation des unités acide méthacryliques en unités méthacrylate de méthyle ; (b) Calculées à partir d'unités méthacrylate de méthyle ; (c) Diamètre moyen en intensité des particules ; (d) Polydispersité des latex ; | | | | | | | |

### Exemple 3 comparatif : procédé d'obtention de particules filamenteuses selon l'invention

L'exemple 3 illustre la synthèse de particules filamenteuses de copolymères blocs poly(méthacrylate de sodium-*co*-styrène sulfonate de sodium)-*b*-poly(méthacrylate de méthyle-*co*-styrène) à partir du macroamorceur préparé et purifié de l'exemple 1.

Dans un ballon monocol de 250 mL sont introduits 55,7 g d'eau permutée, 2,29 g de macroamorceur P(MAA-*co*-SS)-SG₁ (4,54×10⁻³ mol.L⁻¹ₑₐᵤ) préparé dans l'exemple 1,23,7 g de soude 1M (1 équivalent par rapport aux unités acide méthacrylique) et 0,295 g de Na₂CO₃ (3,5 x 10⁻² mol.L⁻¹). Ce mélange est agité à température ambiante, pendant 15 minutes environ, jusqu'à dissolution complète du macroamorceur, qui est alors sous la forme poly(méthacrylate de sodium-*co*-styrène sulfonate de sodium). 18,2 g de méthacrylate de méthyle et 1,8 g de styrène sont ensuite ajoutés (taux de solide = 19,5%) et le mélange est dégazé par un bullage d'azote à température ambiante pendant 30 minutes.

Le milieu est alors introduit dans un réacteur Parr®, série 5100, muni d'une cuve en verre simple enveloppe de 300 mL d'un diamètre intérieur de 63 mm et d'une hauteur utile de 102 mm. L'agitation est maintenue par un agitateur à entraînement magnétique munie d'une turbine à 250 rpm. La cuve du réacteur est préalablement chauffée.

Le milieu est introduit dans le réacteur chaud sous une pression de 3 bar en azote et le temps t=0 est déclenché à 60°C et est maintenu à 90°C tout le long de la polymérisation. Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex (par TEM).

Le tableau 5 ci-dessous présente les caractéristiques des latex prélevés.

**Tableau 4**

| Temps (h) | Conversion (%) | M_{n, exp}^{a} g.mol⁻¹ | Mₙ, théo^{b} g.mol⁻¹ | Iₚ^{a} | pH |
|---|---|---|---|---|---|
| 0,25 | 18 | 23 900 | 17 200 | 1,3 | 7,9 |
| 0,5 | 25,5 | 31 600 | 21 350 | 1,24 | - |
| 0,75 | 43,6 | 42 850 | 31 400 | 1,13 | 7,55 |
| 1 | 52 | 46 700 | 36 000 | 1,13 | - |
| 3,1 | 68 | 53 700 | 44 900 | 1,2 | 6,7 |

| | | | | | |
|---|---|---|---|---|---|
| (a) Déterminées par chromatographie d'exclusion stérique dans le DMF avec 1g.L⁻¹ de LiBr, avec une calibration au polyméthacrylate de méthyle, après méthylation des unités acide méthacryliques en unités méthacrylate de méthyle ; (b) Calculées à partir d'unités méthacrylate de méthyle. | | | | | |

Le latex obtenu en fin de polymérisation est blanc est très visqueux.

L'aspect des particules est analysé par microscopie électronique à transmission (TEM). Ce microscope est de type JEOL 100 Cx II à 100 keV équipé avec une caméra haute résolution CCD camera Keen View de SIS. Les images obtenues sont présentées dans les figures 2,3 et 4 comme indiqué ci-dessous :
- la figure 2 correspond à 25,5% en conversion massique avec un taux de 31% en poids en fraction hydrophile ;
- la figure 3 correspond à 52% en conversion massique avec un taux de 18% en poids en fraction hydrophile ;
- la figure 4 correspond à 68% en conversion massique avec un taux de 14,4% en poids en fraction hydrophile.

### Exemple 4 selon l'invention : procédé d'obtention de particules filamenteuses réticulées

L'exemple 4 illustre la synthèse de particules filamenteuses contenant du réticulant, de copolymères blocs poly(méthacrylate de sodium-*co*-styrène sulfonate de sodium)-*b-*poly(méthacrylate de méthyle-*co*-styrène-co-divinylbenzène) à partir du macroamorceur préparé et purifié dans l'exemple 1.

Dans un ballon monocol de 250 mL sont introduits 57 g d'eau permutée, 2,63 g de macroamorceur P(MAA-*co*-SS)-SG₁ (5.22×10⁻³ mol.L⁻¹ₑₐᵤ) préparé dans l'exemple 1, 24,2 g de soude 1M (1 équivalent par rapport aux unités acide méthacrylique) et 0,296 g de Na₂CO₃ (3,45 ×10⁻² mol.L⁻¹). Ce mélange est agité à température ambiante, pendant 15 minutes environ, jusqu'à dissolution complète du macroamorceur, qui est alors sous la forme poly(méthacrylate de sodium-*co*-styrène sulfonate de sodium). 18,1 g de méthacrylate de méthyle et 0,784 g de styrène (f_{0,S} = 0,04 mol ; *f_{0,S}*=*n_{Sty}*/(*n_{sty}*+*n_{MMA}*)) sont ensuite ajoutés et le mélange est dégazé par un bullage d'azote à température ambiante pendant 30 minutes.

Le milieu est introduit dans un réacteur chaud (même configuration que dans l'exemple 2 sous une pression de 3 bar en azote et une agitation à 250 rpm. Le temps t=0 est déclenché à 60°C et le réacteur et est maintenu à 90°C tout le long de la polymérisation.

Au bout de 50 minutes, 0,982 g de divinylbenzène (F_{0,DVP} = 0,04 mol) (*f*_{0,*DVP*} =*n_{DVP}*/(*n_{DVP}*+*n_{MMA}*)(taux de solide = 19%) sont introduits dans le milieu pour réticuler les fibres après leur formation.

Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères.

Le tableau 5 ci-dessous présente les caractéristiques des latex prélevés.

**Tableau 5**

| Temps (h) | Conversion (%) | M_{n, exp}^{a} g.mol⁻¹ | Mₙ, théo^{b} g.mol⁻¹ | Iₚ^{a} | pH |
|---|---|---|---|---|---|
| 0,25 | 19 | - | 15 700 | - | 7,8 |
| 0,5 | 26 | - | 18 800 | - | - |
| 0,75 | 45 | - | 27 300 | - | - |
| 1 | 52 | - | 31 600 | - | - |
| 3 | 65 | - | 37 700 | - | - |

| | | | | | |
|---|---|---|---|---|---|
| (a) Déterminées par chromatographie d'exclusion stérique dans le DMF avec 1g.L⁻¹ de LiBr, avec calibration au polyméthacrylate de méthyle, après méthylation des unités acide méthacryliques en unités méthacrylate de méthyle ; (b) Calculées à partir d'unités méthacrylate de méthyle. | | | | | |

Le latex obtenu en fin de polymérisation est sous forme de gel. Le réticulant est ajouté en cours de polymérisation pour permettre l'autoassemblage des particules avant la réticulation les micelles sous formes de micelles allongées.

Les images obtenues sont présentées dans la figure 5 qui correspond à 68% en conversion massique avec un taux de 14,4% en poids en fraction hydrophile.

### Exemple 5 - Etude du comportement des particules filamenteuses selon l'invention en milieu dispersé, en variant le pH et la salinité

Des particules filamenteuses préparées dans une solution aqueuse à 0,2% en poids sont dialysées pendant 4 jours contre de l'eau ultra pure. La figure 6 correspond à l'image TEM de particules filamenteuses dialysées.

Des particules filamenteuses préparées dans une solution aqueuse à 0,2% en poids sont centrifugées pendant 1 heure à 2 100 rpm et à 10°C. Le sédiment (ou culot de centrifugation) obtenu est dilué dans une solution aqueuse. La figure 7 correspond à l'image TEM de ces particules après centrifugation.

La figure 8 correspond à l'image TEM de particules filamenteuses diluées dans une solution à pH 5.

La figure 9 correspond à l'image TEM de particules filamenteuses diluées dans une solution aqueuse contenant 35gr de sel (NaCl) pour 1kg d'eau.

Ces résultats montent que les particules filamenteuses selon l'invention voient leur forme et structure se maintenir en milieu dispersé, indépendamment de leur concentration dans le milieu, de la dialyse des particules (figure 6), de la centrifugation du milieu (figure 7) et/ou des variations de pH (figure 8) ou de salinité de celui-ci (figure 9).

### Exemple 6 : Préparation du macroamorceur poly(acide méthacrylique-co-styrène sulfonate de sodium) in situ pour le procédé d'obtention de micelles sphériques en une unique étape

Cet exemple illustre la préparation d'un copolymère vivant poly(acide méthacrylique-co-styrène sulfonate de sodium), utilisé comme macroamorceur, agent de contrôle et stabilisant, en pied de cuve, pour la synthèse de nanoparticules chevelues sous formes de micelles sphériques de copolymères à blocs poly(méthacrylate de sodium-*co*-styrène sulfonate de sodium)-*b*-poly(méthacrylate de méthyle-*co*-styrène). Le copolymère amphiphile est synthétisé en une seule étape.
Les conditions de synthèse du macroamorceur peuvent être variées (durée de la polymérisation, teneur en styrène sulfonate de sodium, concentration et pH) pour adapter et faire varier la composition du macroamorceur.

Pour ce faire, un mélange contenant 15,3 mg de SG1 (1,27 × 10⁻³ mol.L⁻¹), 4,212 g d'acide méthacrylique (2,05 mol.L⁻¹), 0,93 g de styrène sulfonate de sodium (0,15 mol.L⁻¹ soit f_{0,SS} = 0,07 ; *f*_{0,SS} = *n_{SS}*/(*nₛ*+*n_{MMA}*)) et 19,5 g d'eau ultra pure est dégazé à température ambiante par un bullage d'azote pendant 20 min. 0,18 g (2,08 ×10⁻² mol.L⁻¹) de l'alcoxyamine BlocBuilder^{®}-MA est ensuite ajouté.

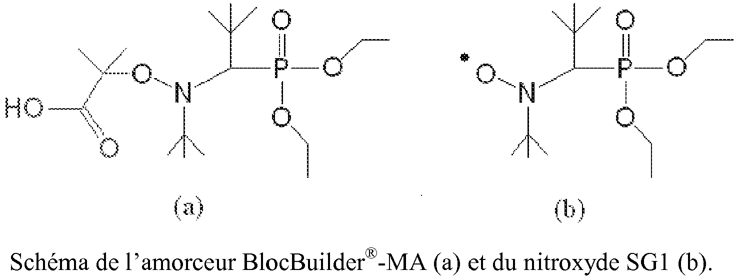

Le dégazage est poursuivi pendant 10 minutes. Le milieu est introduit dans un réacteur chaud sous une pression de 1 bar en azote et une agitation à 250 rpm. Le temps t=0 est déclenché à l'immersion et le réacteur est maintenu à environ 70°C pendant 15 minutes.

Pendant cette réaction, dans un ballon sont introduits 20,8 g de soude 1M (1 équivalent par rapport aux unités acide méthacrylique) et 0,1615 g de Na₂CO₃ (3,8 ×10⁻² mol.L⁻¹), 9,19 g de méthacrylate de méthyle et 0,92 g de styrène sont ensuite ajoutés (taux de solide = 18%) et le mélange est dégazé par un bullage d'azote à température ambiante pendant 20 minutes. Après 15 minutes de synthèse, c'est-à-dire, la synthèse du macroamorceur du type poly(acide méthacrylique-co-styrène sulfonate de sodium)-SG1, le second milieu de réaction contenant les monomères hydrophobes est introduit à pression ambiante puis une pression de 3 bar en azote et une agitation à 250 rpm. Le temps t=0 est déclenché à 60°C dans le milieu réactionnel et le réacteur est maintenu à 95°C tout le long de la polymérisation. Des prélèvements sont réalisés à intervalles réguliers afin de :
- déterminer la cinétique de polymérisation par gravimétrie (mesure d'extrait sec) ;
- suivre l'évolution des masses molaires moyennes en nombre (Mn) avec la conversion en monomères ;
- évaluer les caractéristiques colloïdales du latex par diffusion de la lumière : diamètre moyen des particules, distribution en taille des particules (polydispersité)).
Le tableau 6 ci-dessous présente les caractéristiques des latex prélevés à partir de la seconde étape de la synthèse des nanoparticules.

**Tableau 6**

| Temps (h) | Conversion (%) | M_{n, exp}^{a} g.mol⁻¹ | Mₙ, théo^{b} g.mol⁻¹ | Iₚ^{a} | pH | Dz^{c} (nm) | ∑^{d} |
|---|---|---|---|---|---|---|---|
| 0,25 | 24 | 23 950 | 22 000 | 1.47 | 4,5-5 | | |
| 0,5 | 33,4 | 33 200 | 27 250 | 1,35 | 4,5-6 | - | - |
| 2,25 | 52,3 | 41 000 | 37 900 | 1,3 | - | - | - |
| 3 | 55,3 | 41 000 | 39 600 | 1,34 | - | 27,5 | 0,15 |

| | | | | | | | |
|---|---|---|---|---|---|---|---|
| (a) Déterminées par chromatographie d'exclusion stérique dans le DMF avec 1g.L⁻¹ de LiBr, avec calibration au polyméthacrylate de méthyle, après méthylation des unités acide méthacryliques en unités méthacrylate de méthyle ; (b) Calculées à partir d'une évaluation théorique de la masse molaire du macroinitiateur synthétisé in situ, soit Mn = 8 500g/mol en équivalent d'unités méthacrylate de méthyle ; (c) Diamètre moyen en intensité des particules ; (d) Polydispersité des latex ; | | | | | | | |

Le latex obtenu en fin de polymérisation est translucide et est très peu visqueux.
La Mₙ expérimentale est déterminée par chromatographie d'exclusion stérique dans le DMF contenant 1g/L de LiBr, avec calibration au polyméthacrylate de méthyle, après méthylation des unités acide méthacryliques en unités méthacrylate de méthyle. Le débit et à 0,8 mL/min avec le toluène comme marqueur de débit. Les échantillons sont préparés à une concentration de 5 mg/mL filtré sur des filtres de 0,45 µm et sont analysés sur des colonnes Polymer Standards Service Columns (GRAM de 30 - 1 000 Å).
L'indice de polydispersité Ip est calculé à partir d'unités méthacrylates de méthyle.

### Abréviations :

PRC - polymérisation radicalaire contrôlée
P4VP - poly(4-vinylpyridine)
PNaA - poly(acrylate de sodium)
SG1 -N-tertiobutyl-N-[1-diethylphosphono-(2,2-diméthylpropyl)]
S ou sty - styrene
SS - styrène sulfonate de sodium
AA - acide acrylique
PEGA - méthyl éther acrylate de poly(ethylene glycol)
TEM - microscopie électronique en transmission
RAFT - polymérisation par addition fragmentation (« Reversible Addition Fragmentation chain Transfer »)
MAA - acide méthacrylique
DMSO - dimethylsulfoxyde
DMF - diméthylformamide
Rpm - rotations par minute
f_{0,Sty} - fraction molaire initiale de styrène dans le mélange des monomères
f_{0,SS} - fraction molaire initiale de styrène sulfonate dans le mélange des monomères
f_{0,DVP} - fraction molaire initiale de divinylbenzène dans le mélange des monomères
BlocBuilder^{®}-MA - (*N*-(2-methylpropyl)-*N*-(1-diethylphosphono-2,2-dimethylpropyl)-*O*-(2-carboxylprop-2-yl) hydroxylamine

## Revendications

1. Procédé de préparation de particules filamenteuses réticulées, lesdites particules étant constituées de copolymères à blocs synthétisés par polymérisation radicalaire contrôlée en émulsion effectuée à partir d'au moins un monomère hydrophobe et d'un comonomère réticulant en présence d'un macroamorceur vivant dérivé d'un nitroxyde, **caractérisé en ce que** :
- lesdites particules filamenteuses sont obtenues en milieu aqueux lors de la synthèse desdits copolymères à blocs effectuée en chauffant le milieu de réaction à une température de 60 à 120°C,
- ledit macroamorceur est hydrosoluble,
- le pourcentage de la masse molaire du macroamorceur hydrosoluble dans le copolymère à blocs final est compris entre 10 et 50%, et **en ce que**
- le taux de conversion du monomère hydrophobe est d'au moins 50%.

2. Procédé selon la revendication 1 dans lequel lesdites particules filamenteuses ont une longueur d'au moins 10 microns.

3. Procédé selon l'une des revendications 1 ou 2 dans lequel le monomère hydrophobe est choisi parmi les monomères vinylaromatiques tels que le styrène ou les styrènes substitués, les acrylates d'alkyle, de cycloalkyle ou d'aryle tels que l'acrylate de méthyle, d'éthyle, de butyle, d'éthyl-2 héxyle ou de phényle, les méthacrylates d'alkyle, de cycloalkyle, d'alkényle ou d'aryle tels que le méthacrylate de méthyle, de butyle, de lauryle, de cyclohexyle, d'allyle, d'éthyl-héxyle ou de phényle et la vinylpyridine.

4. Procédé selon l'une des revendications 1 à 3 dans lequel le pourcentage de la masse molaire du macroamorceur hydrosoluble dans le copolymère à blocs final est compris entre 10 et 30%.

5. Procédé selon l'une des revendications 1 à 4 dans lequel le taux massique de la partie hydrophile composant le copolymère à bloc final est inférieur à 25%.

6. Procédé selon l'une des revendications 1 à 5 dans lequel le pH initial du milieu de réaction est compris entre 5 et 10.

7. Procédé selon l'une des revendications 1 à 6, dans lequel le comonomère réticulant est choisi parmi les divinylbenzènes, les trivinylbenzènes, les (méth)acrylates allyliques, les (méth)acrylates de diallylmaléatepolyol et les di(méth)acrylates d'alkylèneglycol qui ont de 2 à 10 atomes de carbone dans la chaîne carbonée.

8. Procédé selon l'une des revendications 1 à 7 de type « one pot » dans lequel on procède d'abord à la synthèse du macroamorceur hydrosoluble en milieu aqueux, puis on forme le copolymère à blocs par ajout d'au moins un monomère hydrophobe et d'un agent réticulant dans le même milieu.

9. Particules filamenteuses réticulées susceptibles obtenues par le procédé selon l'une quelconque des revendications 1 à 8, présentant un taux massique de fraction hydrophile inférieur à 25% en poids.

## Patentansprüche

1. Verfahren zur Herstellung von vernetzten filamentösen Partikeln, wobei die Partikel aus Blockcopolymeren bestehen, die durch kontrollierte radikalische Emulsionspolymerisation synthetisiert werden, die ausgehend von zumindest einem hydrophoben Monomer und einem vernetzenden Comonomer in Gegenwart eines lebenden, von einem Nitroxid abgeleiteten Makroinitiators durchgeführt wird, **dadurch gekennzeichnet, dass**:
- die filamentösen Partikel in einem wässrigen Medium während der Synthese der Blockcopolymere erhalten werden, die unter Erwärmen des Reaktionsmediums auf eine Temperatur von 60 bis 120 °C durchgeführt wird,
- der Makroinitiator wasserlöslich ist,
- der prozentuale Anteil der Molmasse des wasserlöslichen Makroinitiators in dem fertigen Blockcopolymer zwischen 10 und 50 % liegt, und dadurch, dass:
- der Umwandlungsgrad des hydrophoben Monomers mindestens 50 % beträgt.

2. Verfahren nach Anspruch 1, wobei die filamentösen Partikel eine Länge von mindestens 10 Mikrometern aufweisen.

3. Verfahren nach einem der Ansprüche 1 oder 2, wobei das hydrophobe Monomer unter vinylaromatischen Monomeren, wie Styrol oder substituierten Styrolen, Alkylacrylaten, Cycloalkylacrylaten oder Arylacrylaten, wie Methylacrylat, Ethylacrylat, Butylacrylat, 2-Ethylhexylacrylat oder Phenylacrylat, Alkylmethacrylaten, Cycloalkylmethacrylaten, Alkenylmethacrylaten oder Arylmethacrylaten, wie Methylmethacrylat, Butylmethacrylat, Laurylmethacrylat, Cyclohexylmethacrylat, Allylmethacrylat, 2-Ethylhexylmethacrylat oder Phenylmethacrylat, und Vinylpyridin ausgewählt ist.

4. Verfahren nach einem der Ansprüche 1 bis 3, wobei der prozentuale Anteil der Molmasse des wasserlöslichen Makroinitiators in dem fertigen Blockcopolymer zwischen 10 und 30 % liegt.

5. Verfahren nach einem der Ansprüche 1 bis 4, wobei der Gewichtsanteil der hydrophilen Einheit, die das fertige Blockcopolymer bildet, unter 25 % liegt.

6. Verfahren nach einem der Ansprüche 1 bis 5, wobei der anfängliche pH-Wert des Reaktionsmediums zwischen 5 und 10 liegt.

7. Verfahren nach einem der Ansprüche 1 bis 6, wobei das vernetzende Comonomer unter Divinylbenzolen, Trivinylbenzolen, Allyl-(meth)acrylaten, Diallylmaleatpolyol(meth)acrylaten und Alkylenglycol(meth)acrylaten, die 2 bis 10 Kohlenstoffatome in der Kohlenstoffkette aufweisen, ausgewählt ist.

8. Verfahren nach einem der Ansprüche 1 bis 7 vom «One Pot»-Typ, wobei zunächst die Synthese des wasserlöslichen Makroinitiators in einem wässrigen Medium durchgeführt wird und dann das Blockcopolymer durch Zugabe mindestens eines hydrophoben Monomers und eines Vernetzungsmittels in das gleiche Medium gebildet wird.

9. Vernetzte filamentöse Partikel nach Anspruch 10, die nach einem Verfahren nach einem der Ansprüche 1 bis 8 erhältlich sind und einen Gewichtsanteil der hydrophilen Einheit unter 25 % aufweisen.

## Claims

1. A method for preparing crosslinked filamentous particles, said particles being composed of block copolymers synthesized by controlled radical emulsion polymerization from at least one hydrophobic monomer and a crosslinking comonomer in the presence of a living macroinitiator derived from a nitroxide, **characterized in that**:
- said filamentous particles are obtained in aqueous medium during the synthesis of said block copolymers, performed by heating the reaction mixture at a temperature of 60 to 120°C,
- said macroinitiator is water-soluble,
- the percentage of the molar mass of the water-soluble macroinitiator in the final block copolymer is between 10% and 50%, and **in that**
- the degree of conversion of the hydrophobic monomer is at least 50%.

2. The method as claimed in claim 1, wherein said filamentous particles have a length of at least 10 microns.

3. The method as claimed in either of claims 1 and 2, wherein the hydrophobic monomer is selected from vinylaromatic monomers such as styrene or substituted styrenes, alkyl, cycloalkyl, or aryl acrylates such as methyl, ethyl, butyl, 2-ethylhexyl, or phenyl acrylate, alkyl, cycloalkyl, alkenyl, or aryl methacrylates such as methyl, butyl, lauryl, cyclohexyl, allyl, 2-ethyl-hexyl, or phenyl methacrylate, and vinylpyridine.

4. The method as claimed in any of claims 1 to 3, wherein the percentage of the molar mass of the water-soluble macroinitiator in the final block copolymer is between 10% and 30%.

5. The method as claimed in any of claims 1 to 4, wherein the mass fraction of the hydrophilic moiety constituting the final block copolymer is less than 25%.

6. The method as claimed in any of claims 1 to 5, wherein the initial pH of the reaction mixture is between 5 and 10.

7. The method as claimed in any of claims 1 to 6, wherein the crosslinking comonomer is selected from divinylbenzenes, trivinylbenzenes, allyl (meth)acrylates, diallyl maleate polyol (meth)acrylates, and alkylene glycol di(meth)acrylates which have from 2 to 10 carbon atoms in the carbon chain.

8. The method as claimed in any of claims 1 to 7, as a "one pot" method wherein first the water-soluble macroinitiator is synthesized in aqueous medium, and then the block copolymer is formed by addition of at least one hydrophobic monomer and of a crosslinking agent to the same medium.

9. Crosslinked filamentous particles obtainable by the method as claimed in any of claims 1 to 8, having a proportion by mass of hydrophilic fraction of less than 25% by weight.
